Europäisches Patentamt

European Patent Office

Office européen des brevets

(11) Publication number: **0 439 204 A1**

# EUROPEAN PATENT APPLICATION

(21) Application number: **91200010.6**

(22) Date of filing: **04.01.91**

(51) Int. Cl.⁵: **B60T 8/26**, B60T 11/34, F16D 55/22, F16D 65/16

(30) Priority: **23.01.90 GB 9001566**

(43) Date of publication of application:
**31.07.91 Bulletin 91/31**

(84) Designated Contracting States:
**AT BE CH DE DK ES FR GR IT LI LU NL SE**

(71) Applicant: **GENERAL MOTORS FRANCE**
**56 à 68 Avenue Louis Roche**
**F-92231 Gennevilliers Paris(FR)**

(72) Inventor: **Pantale, David**
**Bat E., 51, Boulevard Foch**
**F-93800 Epinay/Seine(FR)**

(74) Representative: **Denton, Michael John et al**
**Patent Section Vauxhall Motors Limited 1st**
**Floor Gideon House 26 Chapel Street**
**Luton Bedfordshire LU1 2SE(GB)**

(54) Disc brake.

(57) A disc brake (10) for a motor vehicle comprising a rotor (12); inner and outer brake pads (14,16) disposed on opposite sides of the rotor and movable into braking engagement therewith; a caliper (18) comprising a piston (26) for urging one of the brake pads against the rotor and having a body (48), a caliper housing (28) having a cylinder (32) positioned on one side of the rotor (12) within which the piston (26) is slidably movable under the action of fluid pressure in the cylinder (32), and a fluid line (34) in the caliper for supplying fluid to the cylinder (32) for movement of the piston (26), a portion (46) of the fluid line passing through the body (48) of the piston (26); and a proportioning valve (54) in the portion (46) of the fluid line and integral with the piston (26) for preventing fluid pressure above a predetermined level acting on the piston (26). Reduces risk of wheel lock on braking. Provides a unitary caliper (18) and proportioning valve (54) prior to installation on a motor vehicle.

*Fig.1.*

## DISC BRAKE

This invention relates to a disc brake for a motor vehicle, and in particular to a disc brake caliper having means for limiting the fluid pressure applied thereto.

It is well known on motor vehicles to provide a disc brake comprising a rotor, inner and outer brake pads, and a caliper housing. Generally, there are two types of disc brake, one having a fixed caliper housing, the other having a moving caliper housing. In the former case, for each brake pad, the caliper housing has a cylinder in which a piston is slidably mounted for urging the respective brake pad into braking engagement with the rotor. The pistons are moved by fluid pressure (generated in the brake system of the motor vehicle) within the cylinders. The cylinders are interconnected so that an equal fluid pressure acts on each piston. In certain cases, two pistons may act on each brake pad. In the case of a moving caliper housing, the caliper housing has one or more cylinders in each of which a piston is slidably mounted for urging the inner brake pad into braking engagement with the rotor, and an arm member for urging the outer brake pad into engagement with the rotor by reactive force on actuation of the piston. The present invention is concerned with either type of disc brake.

It is also well known on motor vehicles to provide, in the braking system of the motor vehicle, at least one proportioning valve. The proportioning valve or valves act to limit the fluid pressure presented to the rear wheel brakes of the motor vehicle. Such proportioning valves substantially prevent the rear wheels from locking. Several types of proportioning valve are known. These include pressure sensitive, load or height sensitive, and inertia sensitive. In general, a pressure sensitive proportioning valve comprises a valve piston acted on by a spring and by fluid pressure in opposition to one another. During normal operation, the spring force is greater than the fluid pressure, and the valve piston is positioned such that the proportioning valve remains open. As the fluid pressure increases, the pressure acts on the valve piston against the action of the spring. Once the fluid pressure reaches a predetermined level, the valve piston is moved (against the action of the spring) to close the proportioning valve, to prevent further increases in fluid pressure reaching the rear brakes. Inertia sensitive proportioning valves act to restrict the fluid pressure presented to the rear brakes whenever a predetermined rate of deceleration of the motor vehicle is exceeded. Such proportioning valves usually comprise a ball rolling up an inclined slope which trips a spring loaded valve to a closed position once the predetermined deceleration is reached. Load or height sensitive proportioning valves respond to changes in the height of the rear suspension of the motor vehicle, and, usually by way of a spring loaded lever connected directly or indirectly to the rear axle of the motor vehicle, actuate the proportioning valve accordingly. In this case, the actuation of the proportioning valve is governed by both the load on the motor vehicle, and its deceleration, both of which affect the height of the rear suspension. In certain circumstances, proportioning valves may be associated with the front wheel brakes of a motor vehicle. The present invention is also concerned with any one of these types of proportioning valve.

It is an object of the present invention to provide a disc brake caliper with an associated proportioning valve for providing means for limiting the fluid pressure applied to the disc brake.

To this end, a disc brake for a motor vehicle in accordance with the present invention comprises a rotor; inner and outer brake pads disposed on opposite sides of the rotor and movable into braking engagement therewith; a caliper comprising a piston for urging one of the brake pads against the rotor and having a body, a caliper housing having a cylinder positioned on one side of the rotor within which the piston is slidably movable under the action of fluid pressure in the cylinder, the cylinder defining a single working chamber for the piston, and a fluid line in the caliper for supplying fluid from a fluid pressure source to the cylinder for movement of the piston, a portion of the fluid line passing through the body of the piston; and a proportioning valve in the portion of the fluid line and integral with the piston for limiting fluid pressure acting on the piston when the fluid pressure from the fluid pressure source exceeds a predetermined level.

As well as meeting the above defined object, the present invention has the advantage of providing a unitary caliper and proportioning valve prior to assembly on a motor vehicle. This arrangement therefore makes the installation of the braking system on the motor vehicle easier.

The caliper is preferably of the moving type, the caliper housing being slidably mountable on a support member and further comprising an arm member for urging the other brake pad against the rotor on movement of the piston to urge the said one brake pad against the rotor.

Alternatively, the caliper may be of the fixed type, in which case the caliper preferably further comprises a second piston for urging the other brake pad against the rotor, and the caliper housing is fixedly mountable on a support member and further comprises a second cylinder positioned on the other side of the rotor within which the second piston is slidably movable under the action of fluid pressure in the second cylinder, the fluid line including a second portion fluidly connecting both cylinders to thereby ensure the fluid pressure acting on each piston is the same.

Preferably, the proportioning valve is of the pressure sensitive type which closes when the fluid pressure in the cylinder or cylinders reaches the predetermined level. In this case, the proportioning valve preferably comprises a stepped bore; a valve seat positioned within the stepped bore; a valve member engageable with the valve seat to close the proportioning valve; a valve piston positioned in the stepped bore and axially movable relative thereto, the valve piston having either the valve seat or the valve member integral therewith; and a spring for normally biasing the valve piston to the open position of the proportioning valve. In this case, the valve member is preferably on the valve piston, and the valve seat is preferably defined by an elastomeric cup seal. In the case where the valve seat is on the valve piston, the valve member is preferably biased towards the valve seat.

Alternatively, the proportioning valve may be of the inertia sensitive type which closes when the motor vehicle exceeds a predetermined deceleration which corresponds to the fluid pressure reaching the predetermined level.

Preferably, the proportioning valve comprises a housing which is formed integrally in one piece with the body of the piston.

Alternatively, the proportioning valve may comprise a housing which makes a screw threaded connection with the body of the piston.

In either of the above cases, the housing of the proportioning valve may extend into the cylinder or one of the cylinders of the caliper housing.

Preferably, the proportioning valve is assembled by passing through an opening in the body of the piston on the cylinder side thereof, the opening being closed by an end cap, prior to the piston being positioned in the cylinder.

Alternatively, the proportioning valve may be assembled by passing through an opening in the body of the piston on the rotor side thereof, the opening being closed by an end cap.

Preferably, the fluid line comprises an axially extending channel between the piston and the caliper housing and an annularly extending groove in the outer surface of the piston. Alternatively, the fluid line may comprise an axially extending channel between the piston and the caliper housing and an annularly extending groove in the wall of the cylinder.

The cylinder is preferably defined by a throughbore in the caliper housing which is closed and sealed at one end by a separately formed end wall.

The proportioning valve may be of the type which acts to prevent fluid pressure above the predetermined level reaching the working chamber of the or each piston. Alternatively, the proportioning valve may be of the type which limits or restricts the flow of fluid to the working chamber of the or each piston when the fluid pressure exceeds the predetermined level.

Preferably, the caliper includes a parking brake mechanism for moving the brake pads into braking engagement with the rotor independently of the fluid pressure.

The present invention also includes a caliper for use in a disc brake as herein defined.

The present invention will now be described, by way of example, with reference to the accompanying drawings, in which:-

Figure 1 is a cross-sectional view of a first embodiment of disc brake in accordance with the present invention;

Figure 2 is a cross-sectional view of a second embodiment of disc brake in accordance with the present invention;

Figure 3 is a cross-sectional view of a third embodiment of disc brake in accordance with the present invention; and

Figure 4 is a cross-sectional view of the proportioning valve associated with the disc brakes shown in Figures 1 to 3.

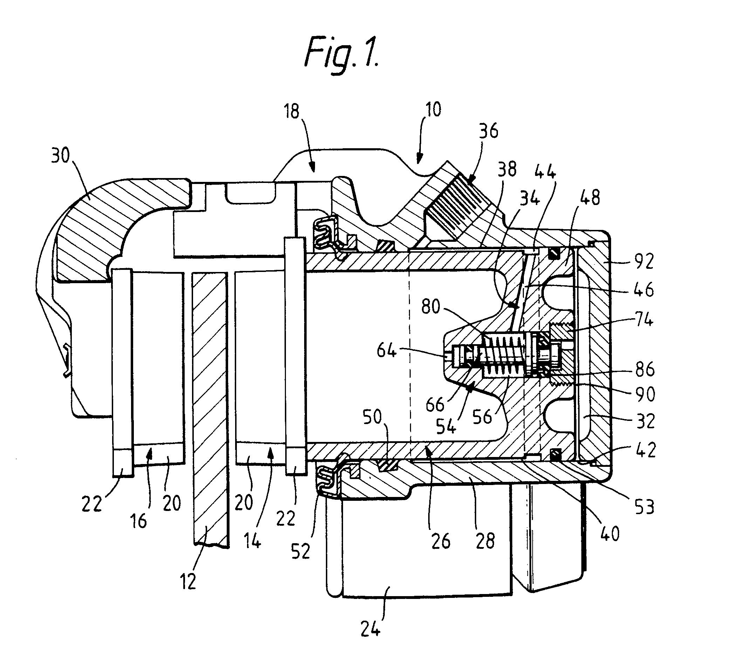

A disc brake 10 in accordance with a first embodiment of the present invention is shown in Figure 1. The disc brake 10 comprises a rotor 12, inner and outer brake pads 14,16 respectively disposed on opposite sides of the rotor, and a caliper 18. The inner and outer brake pads 14,16 each comprises friction material 20 mounted on a backing plate 22. In this embodiment, the caliper 18 is the moving or floating type and is slidably mounted on a support member (not shown, for example, a bracket or knuckle of the suspension/steering system of the motor vehicle) by way of sliding sleeves 24. The caliper 18 comprises a piston 26, a caliper housing 28 having an arm member 30 and a cylinder 32, and a fluid line 34. The fluid line 34 connects the cylinder 32 to a fluid inlet 36 by way of an axially extending channel 38 between the outer surface 40 of the piston 26 and the wall 42 of the cylinder 32, an annularly extending groove 44 in the outer surface of the piston, and a portion 46 passing through the body 48 of the piston between the groove and the cylinder. The arm member 30 engages the backing plate 22 of the outer brake pad 16. The piston 26 is slidably mounted in the cylinder 32 and engages the backing plate 22 of the inner brake pad 14. The cylinder 32 defines a single working chamber for the piston 26. An elastomeric seal 50 between the piston 26 and the caliper housing 28 provides a fluid seal for the cylinder 32, and a flexible boot 52 substantially prevents ingress of dirt into the cylinder. Another elastomeric seal 53 between the piston 26 and the caliper housing 28 provides a fluid tight seal between the cylinder 32 and the groove 44.

The disc brake 10 as thus far described is well known, and its operation is also well known to those skilled in the art, and will not be described in detail. In use, pressurised brake fluid from a fluid pressure source (not shown) is introduced into the working chamber defined by the cylinder 32 by way of fluid inlet 36 and fluid line 34. The pressurised brake fluid in the cylinder 32 causes the piston 26 to move in an axial direction, which consequently urges the inner brake pad 14 into engagement with the rotor 12. By reactive force, the arm member 30 then moves the outer brake pad 16 into engagement with the rotor 12, such that the friction material 20 of the inner and outer brake pads 14,16 provides braking engagement with the rotor.

A proportioning valve 54 is positioned in a stepped bore 56 in the portion 46 of the fluid line 34 in the body 48 (which thereby defines a housing for the proportioning valve) of the piston 26. The proportioning valve 54, which is of the pressure sensitive type, is shown in greater detail in Figure 4. The stepped bore 56 has three sections 58,60,62, with the first section 58 having a larger diameter than the second section 60, and with the second section having a larger diameter than the third section 62. The third section 62 is connected to atmospheric pressure by way of an air vent 64. The second section 60 is fluidly connected to the groove 44 and the channel 38, and hence to the fluid inlet 36, and forms part of the portion 46 of the fluid line 34 in the body 48 of the piston 26. A valve piston 66 extends through the three sections 58,60,62 of the stepped bore 56 and has first, second and third disc members 68,70,72 positioned in the first, second and third sections respectively of the stepped bore. The diameters of the disc members 68,70,72 are such as to allow the valve piston 66 to move axially relative to the stepped bore 56. The second disc member 70 makes a sliding fit in the second section 60 of the stepped bore 56, and the third disc member 72 makes a sliding fit in the third section 62 of the stepped bore. An end cap 74 closes the first section 58 of the stepped bore 56, and has a bore 76 therethrough which opens into the second section 60 of the stepped bore 56, which defines another part of the portion 46 of the fluid line 34, and within which the first disc member 68 of the valve piston 66 is positioned. An elastomeric seal 78 is positioned on the opposite side of the third disc member 72 to the second section 60 of the stepped bore 56 to form a fluid tight seal between the second section 60 and the air vent 64. A helical spring 80 is positioned in the second section 60 of the stepped bore 56 between a shoulder 82 (between the second and third sections 60,62 of the stepped bore) and one side of the second disc member 70. Positioned on the other side of the second disc member 70 within the second section 60 of the stepped bore 56 is an elastomeric cup seal 86 against which the second disc member abuts under the action of the helical spring 80. The elastomeric cup seal 86 is positioned in the second section 60 of the stepped bore 56 between the second disc member 70 and an abutment shoulder 88 defined by the end cap 74. The elastomeric cup seal 86 defines a valve seat engageable by a valve member defined by the first disc member 68 of the valve piston 66.

During normal operation of the disc brake 10, brake fluid can pass between the fluid inlet 36 and the cylinder 32 by way of the second section 60 of the stepped bore 56, past the outer edge of second disc member 70, between the second disc member and the elastomeric cup seal 86, and through the bore 76. Initially, as the fluid pressure increases, the valve piston 66 remains stationary relative to the stepped bore 56. However, when the fluid pressure at the fluid inlet 36 reaches a predetermined level, the valve piston 66 is moved in a direction X relative to the stepped bore 56 such as to compress the helical spring 80. This is due to the action of the fluid pressure on the third disc member 72. The movement of the valve piston 66 brings the first disc member 68 into engagement with the elastomeric cup seal 86 to provide a substantially fluid tight seal between the fluid inlet 36 and the cylinder 32 to prevent further increases in fluid pressure at the fluid inlet being passed on to the cylinder. The predetermined fluid pressure at which the proportioning valve 54 closes can be determined from the cross-sectional area of the third disc member 72 and the strength of the helical spring 80, and adjusted accordingly, in a manner well known to those skilled in the art. With this arrangement, the risk of a wheel brake locking due to an excessively high fluid pressure in the cylinder 32 is substantially eliminated. Excess fluid pressure generated in the cylinder 32 due to thermal expansion, etc. is relieved by seepage of brake fluid passed the outer periphery of the elastomeric cup seal 86 into the second section 60 of the stepped bore 56. Passage of brake fluid in the other direction is prevented by the design of the elastomeric cup seal 86. When the fluid pressure at the fluid inlet 36 falls below the predetermined level, the valve piston 66 moves back in the opposite direction to the direction X to open the proportioning valve 54.

In the arrangement shown in Figure 1, the first section 58 of the stepped bore 56 extends to an opening 90 in the body 48 of the piston 26, and the end cap 74 sealingly closes the opening after assembly of the proportioning valve 54 in the stepped bore 56, the end cap being screw threaded into position. Further, the cylinder 32 is defined by a throughbore in the caliper housing 28 (which thereby defines the wall 42 of the cylinder) which is closed and sealed at one end by an end wall 92. This arrangement allows insertion of the piston 28 from either end of the cylinder 32, and also allows the alternative of the assembly of the proportioning valve 54 in the piston after the piston has been placed in position prior to attachment of the end wall 92.

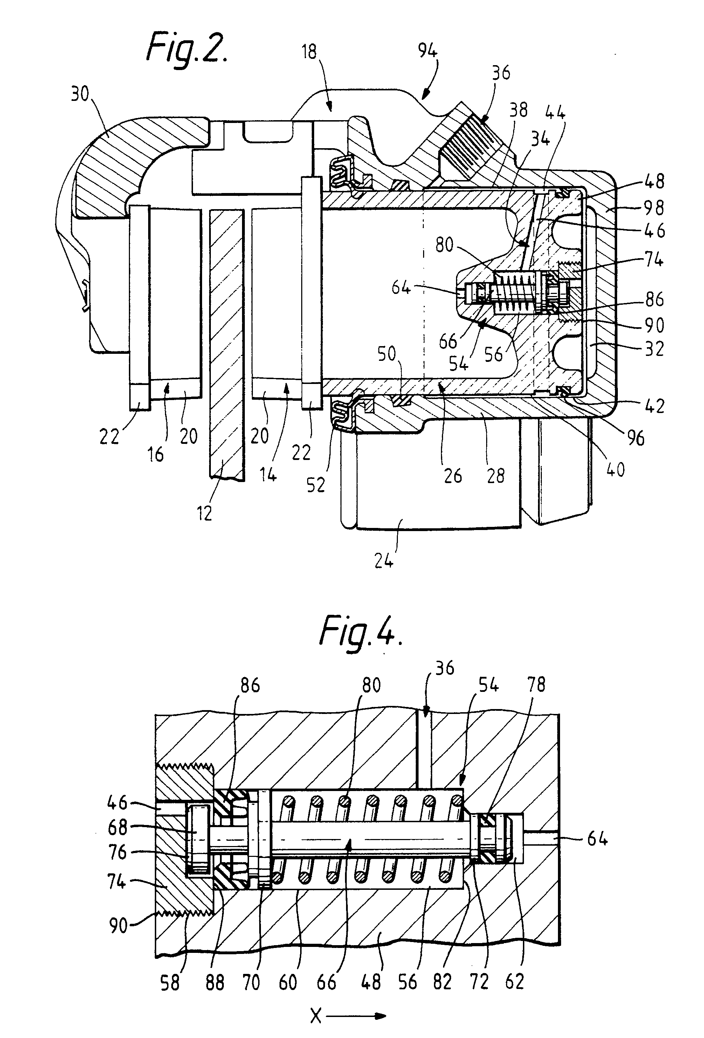

A second embodiment of disc brake 94 in accordance with the present invention is shown in Figure 2. This embodiment is substantially identical to the first embodiment shown in Figure 1, and like parts have been given the same reference numeral. In this embodiment, the end wall 98 of the cylinder 32 is formed integrally with the rest of the caliper housing 28. Further, in this embodiment, the elastomeric seal 53 in Figure 1 has been replaced by an elastomeric cup seal 96. With this arrangement, the piston 26 can only be inserted in the cylinder 32 from the open end of the cylinder, which has a slightly smaller diameter than cylinder 32, due to the presence of the channel 38, hence the preference for the elastomeric cup seal 96.

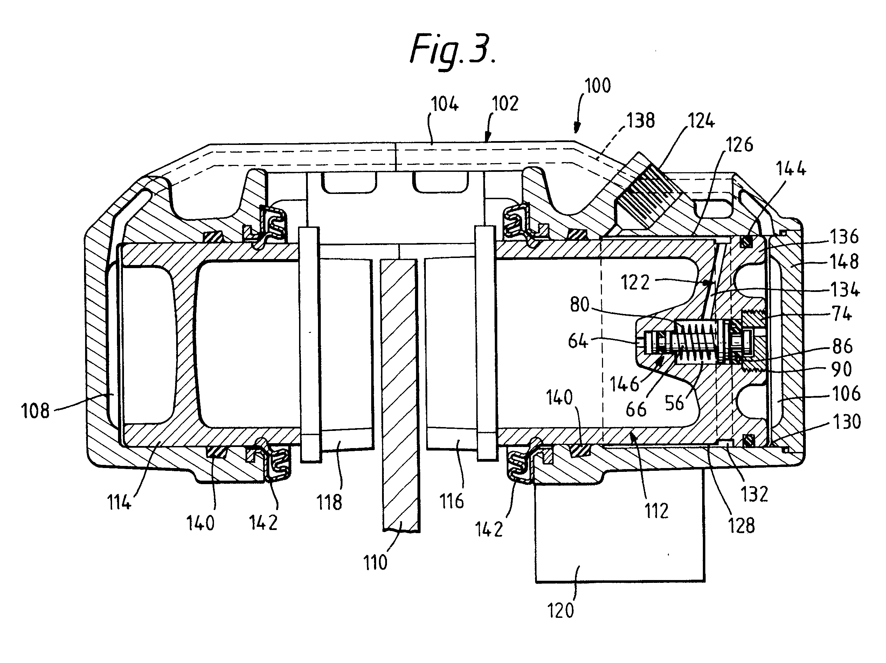

A third embodiment of disc brake 100 in accordance with the present invention is shown in Figure 3. In this arrangement, the disc brake 100 comprises a caliper 102 which is of the fixed type. The caliper 102 comprises a caliper housing 104 having a cylinder 106,108 on either side of a rotor 110. Slidably mounted in each cylinder 106,108 is a piston 112,114 respectively, each of which act on brake pad 116,118 engageable with the rotor 110. Each cylinder 106,108 defines a single working chamber for each piston 112,114. The caliper 102 has a mounting bracket 120 for fixedly securing the caliper in position. A fluid line 122 connects one of the cylinders 106 with a fluid inlet 124 by way of an axially extending channel 126 between the outer surface 128 of the associated piston 112 and the wall 130 of the cylinder 106, an annularly extending groove 132 in the outer surface of the piston 112, and a portion 134 passing through the body 136 of the piston 112 between the groove and the cylinder. A second portion 138 of the fluid line 122 extends through the caliper housing 104 to interconnect the cylinders 106,108 to ensure the same fluid pressure is applied to each cylinder. An elastomeric seal 140 between each piston 112,114 and the caliper housing 104 provide a fluid seal for each cylinder 106,108, and flexible boots 142 substantially prevent ingress of dirt into each cylinder. Another elastomeric seal 144 between the piston 112 and the caliper housing 104 provides a fluid tight seal between the associated cylinder 106 and the groove 132.

The disc brake 100 as thus far described is well known, and its operation is also well known to those skilled in the art, and will not be described in detail. In use, pressurised brake fluid from a fluid pressure source (not shown) is introduced into the working chambers defined by the cylinders 106,108 by way of fluid inlet 124 and fluid line 122. The pressurised brake fluid in the cylinders 106,108 causes the pistons 112,114 to move in an axial direction towards one another, which consequently urges the brake pads 116,118 into braking engagement with the rotor 110.

A proportioning valve 146 is positioned in the portion 134 of the fluid line 122 within the body 136 of the piston 112. The proportioning valve 146 is the same as that shown in Figure 4, and like parts have been given the same reference numeral. The proportioning valve 146 acts to prevent brake fluid pressure above a predetermined level reaching the cylinders 106,108 in exactly the same way as described above. The proportioning valve 146 is assembled in position in the body 136 of the piston 112 prior to the piston 112 being positioned in the cylinder 106.

The cylinder 106 is defined by a throughbore in the caliper housing 104 (which thereby defines the wall 130 of the cylinder) which is closed and sealed at one end by an end wall 148. This allows insertion of the piston 112 from either end of the cylinder 106 prior to attachment of the end wall 148. This arrangement also allows the alternative of the assembly of the proportioning valve 146 after insertion of the piston 112 but prior to attachment of the end wall 148.

As an alternative to the above described arrangements, the annularly extending groove may be formed in the wall 42,130 of the cylinder 32,106 rather than in the outer surface 40,128 of the piston 26,112.

In the various embodiments described above, a single working chamber is provided for the or each piston of each disc brake. Further, a single proportioning valve integral with the piston or one of the pistons can limit the fluid pressure in the or each working chamber of each disc brake.

Whilst the above embodiments have all been described as having proportioning valves which are of the pressure sensitive type, it will be appreciated that the present invention also covers disc brakes having an inertia sensitive proportioning valve.

Further, the proportioning valve may act to prevent fluid pressure above the predetermined level reaching the working chamber or chambers (as described above), or may act to limit or restrict the flow of brake fluid to the working chamber or chambers when the fluid pressure from the fluid pressure source exceeds the predetermined level. The various types of proportioning valve are well known to those skilled in the art.

It will be understood by those skilled in the art that the fluid pressure source is typically a master cylinder, with or without a pressure booster, which is actuated by a vehicle operator.

Attention is drawn to our corresponding patent application no._____ (ref: MJD/484), filed the same day as the present application. In particular, alternative designs of suitable proportioning valves and parking brake mechanism can be found in this corresponding application which could be used with the present invention, and which are incorporated herein by reference.

## Claims

1. A disc brake (10) for a motor vehicle comprising a rotor (12); inner and outer brake pads (14,16) disposed on opposite sides of the rotor and movable into braking engagement therewith; and a caliper (18) comprising a piston (26) for urging one of the brake pads against the rotor and having a body (48), a caliper housing (28) having a cylinder positioned on one side of the rotor within which the piston is slidably movable under the action of fluid pressure in the cylinder, the cylinder defining a single working chamber, and a fluid line (34) in the caliper for supplying fluid from a fluid pressure source to the cylinder for movement of the piston; characterised in that a portion (46) of the fluid line passes through the body of the piston; and by a proportioning valve (44) in the portion of the fluid line and integral with the piston (26) for limiting the fluid pressure acting on the piston when the fluid pressure from the fluid pressure source exceeds a predetermined level.

2. A disc brake as claimed in Claim 1, in which the caliper (18) is of the moving type, wherein the caliper housing (28) is slidably mountable on a support member and further comprises an arm member (30) for urging the other brake pad (16) against the rotor (12) on movement of the piston (26) to urge the said one brake pad (14) against the rotor.

3. A disc brake as claimed in Claim 1, in which the caliper (102) is of the fixed type, wherein the caliper further comprises a second piston (114) for urging the other brake pad (118) against the rotor (110), and wherein the caliper housing (104) is fixedly mountable on a support member and further comprises a second cylinder (108) positioned on the other side of the rotor within which the second piston is slidably movable under the action of fluid pressure in the second cylinder, the fluid line including a second portion (138) fluidly connecting both cylinders (106,108) to thereby ensure the fluid pressure acting on each piston (112,114) is the same.

4. A disc brake as claimed in any one of Claims 1 to 3, wherein the proportioning valve (54,146) is of the pressure sensitive type which closes when the fluid pressure in the cylinder or cylinders (32,106,108) reaches the predetermined level.

5. A disc brake as claimed in Claim 4, wherein the proportioning valve (54) comprises a stepped bore (56); a valve seat (86) positioned within the stepped bore; a valve member (68) engageable with the valve seat to close the proportioning valve; a valve piston (66) positioned in the stepped bore and axially movable relative thereto, the valve piston having either the valve seat or the valve member integral therewith; and a spring (80) for normally biasing the valve piston to the open position of the proportioning valve.

6. A disc brake as claimed in Claim 5, wherein the valve member (68) is on the valve piston (66).

7. A disc brake as claimed in Claim 6, wherein the valve seat is defined by an elastomeric cup seal (86).

8. A disc brake as claimed in Claim 5, wherein the valve seat is on the valve piston, and wherein the valve member is biased towards the valve seat.

9. A disc brake as claimed in any one of Claims 1 to 3, wherein the proportioning valve is of the inertia sensitive type which closes when the motor vehicle exceeds a predetermined deceleration which corresponds to the fluid pressure reaching the predetermined level.

10. A disc brake as claimed in any one of Claims 1 to 9, wherein the proportioning valve comprises a housing which makes a screw threaded connection with the piston.

11. A disc brake as claimed in any one of Claim 1 to 9, wherein the proportioning valve (54) comprises a housing (48) which is formed integrally in one piece with the piston (26).

12. A disc brake as claimed in Claim 10 or Claim 11, wherein the housing of the proportioning valve extends into the cylinder or one of the cylinders of the caliper housing.

13. A disc brake as claimed in any one of Claims 1 to 12, wherein the proportioning valve (54) is assembled by passing through an opening (90) in the piston (26) on the cylinder side thereof, the opening being closed by an end cap (74).

14. A disc brake as claimed in any one of Claims 1 to 12, wherein the proportioning valve is assembled by passing through an opening in the piston on the brake pad side thereof, the opening being closed by an end cap.

15. A disc brake as claimed in any one of Claims 1 to 14, wherein the fluid line (34) comprises an axially extending channel (38) between the piston (26) and the caliper housing (28) and an annularly extending groove (44) in the outer surface (40) of the piston (26).

16. A disc brake as claimed in any one of Claims 1 to 14, wherein the fluid line comprises an axially extending channel between the piston and the caliper housing and an annularly extending groove in the wall of the cylinder.

17. A disc brake as claimed in any one of Claims 1 to 16, wherein the cylinder (32) is defined by a throughbore in the caliper housing (28) which is closed and sealed at one end by a separately formed end wall (92).

18. A disc brake as claimed in any one of Claims 1 to 17, wherein the caliper includes a parking brake mechanism for moving the brake pads into braking engagement with the rotor independently of the fluid pressure.

19. A caliper for use in a disc brake as claimed in any one of the preceding Claims.

## Fig.1.

# Fig.2.

# Fig.4.

Fig.3.

EP 0 439 204 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 012 872 (TOYOTA)<br>* page 3, lines 5 - 23; figure 6 * * page 2, lines 63 - 95; figure 3 * | 1,2,11,12, 14,4-7 | B 60 T 8/26<br>B 60 T 11/34<br>F 16 D 55/22<br>F 16 D 65/16 |
| A | WO-A-8 900 253 (AUTOMOTIVE PRODUCTS)<br>* page 18, line 14 - page 20, line 27; figure 4 * | 1,4,5,8, 14,15 | |
| A | FR-A-1 360 523 (PORSCHE)<br>* page 2, right-hand column, line 53 - page 4, left-hand column, line 36; figures 1-4 * | 1,3-5,8, 16,17 | |
| A | FR-A-1 544 925 (ALFRED TEVES)<br>* page 11, left-hand column, line 13 - page 12, left-hand column, line 54; figures 1, 11, 12 * | 1-3,16 | |
| A | FR-A-2 517 270 (LUCAS INDUSTRIES)<br>* page 7, line 17 - page 11, line 37; figure 1 * | 9 | |
| A | GB-A-2 033 515 (G.M.)<br>* page 2, line 80 - page 3, line 22; figures 5, 7 * | 4-6,10 | |
| A | EP-A-0 127 314 (G.M.)<br>* abstract; figures 1, 2 * | 2,17 | **TECHNICAL FIELDS SEARCHED (Int. Cl.5)**<br><br>B 60 T<br>F 16 D |

The present search report has been drawn up for all claims

| Place of search | Date of completion of search | Examiner |
|---|---|---|
| The Hague | 16 April 91 | MEIJS P.C.J. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document